# NEUE EUROPÄISCHE PATENTSCHRIFT

(11) **EP 2 571 128 B3**
(45) Veröffentlichungstag dieser Patentschrift: **24.04.2019**
(45) Hinweis auf die Patenterteilung: 21.10.2015
(21) Anmeldenummer: 12171856.3
(22) Anmeldetag: 13.06.2012
(51) Int. Cl.: H02H 3/33, H02H 5/12

(54) **Elektrische Überwachungseinrichtung und Verfahren zur Sicherstellung der Schutzfunktion einer Fehlerstrom-Schutzeinrichtung (RCD) Typ A**
Electrical monitoring device and method for securing the protective function of a residual current safety device (RCD) type A
Dispositif de surveillance électrique et procédé de sécurisation de la fonction de protection d'un dispositif de protection à courant différentiel (RCD) de type A

(30) Priorität: 19.09.2011 DE 102011082941
(43) Veröffentlichungstag der Anmeldung: 20.03.2013
(73) Patentinhaber: Bender GmbH & Co. KG, 35305 Grünberg (DE)
(72) Erfinder: Sellner, Harald, 35305 Grünberg (DE); Hofheinz, Wolfgang, 35305 Grünberg (DE)
(74) Vertreter: advotec.

(56) Entgegenhaltungen:
- DE-A1- 19 735 412
- DE-A1- 19 826 410
- DE-A1- 19 943 801

## Beschreibung

Die Erfindung betrifft eine elektrische Schutzvorrichtung und ein Verfahren zur Sicherstellung der Funktion einer Fehlerstrom-Schutzeinrichtung (RCD) Typ A in einem Stromversorgungssystem.

Als Schutzmaßnahme in elektrischen Anlagen für den Schutz bei Berühren von Körpern elektrischer Betriebsmittel (Schutz bei indirektem Berühren - Fehlerschutz) sind Fehlerstrom-Schutzeinrichtungen (RCDs - residual current protective device) bekannt und als Schutz in speziellen Bereichen elektrischer Anlagen vorgesehen.

Die Wirkungsweise einer derartigen Fehlerstrom-Schutzeinrichtung (RCD) beruht auf der Tatsache, dass im fehlerfreien Betrieb einer elektrischen Anlage die vektorielle Summe der Ströme auf allen stromführenden Leitern einer Zuleitung gleich Null ist und somit auch kein Magnetfeld in der Umgebung der Zuleitung existiert. Entsteht auf Grund eines Isolationsfehlers ein Fehlerstrom, der außerhalb der Zuleitung über einen Körper bzw. über Erde abfließt, ergibt sich ein Differenzstrom. Das veränderliche Magnetfeld dieses Differenzstroms induziert sekundärseitig einen Strom, der ein Schaltglied auslöst, das die fehlerbehaftete Zuleitung trennt.

In einfachster, ursprünglicher Variante ist eine Fehlerstrom-Schutzeinrichtung (RCD) auf Grund des Induktionsprinzips nur in der Lage, zeitliche Änderungen des magnetischen Flusses und damit in der Praxis nur reine Wechselfehlerströme bzw. Wechseldifferenzströme zu detektieren. An die elektrische Anlage angeschlossene Verbraucher wie beispielsweise elektrische Maschinen, die elektronische Halbleiterbauelemente wie Dioden oder Thyristoren in Gleichrichtern oder Frequenzumrichtern aufweisen, können allerdings auch Fehlerströme erzeugen, die einen nicht rein sinusförmigen, sondern einen pulsierenden zeitlichen Verlauf besitzen. Daher sind Fehlerstrom-Schutzeinrichtungen (RCDs) konzipiert worden, die auch in der Lage sind, neben reinen Wechselfehlerströmen diese pulsierenden Gleichfehlerströme zu erfassen. Derartige pulsstromsensitive Fehlerstrom-Schutzeinrichtungen (RCDs) werden auch als Fehlerstrom-Schutzeinrichtungen (RCDs) Typ A bezeichnet.

Aus der Offenlegungsschrift DE 199 43 801 A1 ist eine Fehlerstrom-Schutzeinrichtung mit einer pulsstromsensitiven und einer gleichstromsensitiven Erfassungseinheit bekannt, wobei den beiden Erfassungseinheiten unterschiedliche, vorzugsweise einstellbare, Bemessungsfehlerströme zugeordnet sind. Diese Fehlerstrom-Schutzeinrichtung erlaubt die weitgehend unabhängige Erfassung von Wechsel- und Gleichfehlerströmen und bietet somit die Möglichkeit, die Schutzfunktion an die Schutzanforderungen der unterschiedlichen Fehlerstromarten anzupassen.

Die Offenlegungsschrift DE 198 26 410 A1 betrifft ein Verfahren und eine Einrichtung zur Isolations- und Fehlerstromüberwachung. Als Maß für den resistiven Fehlerstrom wird das Produkt zwischen der Amplitude des erfassten Wechselstromanteils des Differenzstroms und dem Kosinus des Phasenwinkels zwischen Wechselstromanteil und Netzwechselspannung gebildet. Durch die Unterscheidung von resistiven Fehlerströmen und kapazitiven Ableitströmen ist das Verfahren auch in ausgedehnten Wechselstromnetzen einsetzbar.

Die Offenlegungsschrift DE 197 35 412 A1 zeigt eine Fehlerstrom-Schutzeinrichtung, bei der eine auslösezeitverzögerte erste Fehlerstrom-Auslöseschaltung für Puls- oder Wechselfehlerstrom und eine zweite, parallel geschaltete, Fehlerstrom-Auslöseschaltung für Gleichfehlerstrom elektronisch voneinander entkoppelt sind. Dadurch können sich die Auslösezeiten und Auslöseströme der Fehlerstromarten nicht gegenseitig beeinflussen.

Die Eigenschaften für (ortsfeste) Fehlerstrom-Schutzeinrichtungen (RCDs) vom Typ A sind in den Normen IEC 61008 und 61009 sowie für ortsveränderliche Fehlerstrom-Schutzeinrichtungen (PRCDs - portable RCDs) vom Typ A in der Norm IEC 62335 für verschiedene Bemessungsdifferenzströme (Bemessungsauslöseströme) festgelegt. Die Schutzwirkung von Fehlerstrom-Schutzeinrichtungen (RCDs) Typ A ist indes nur gegeben, wenn sie hinsichtlich der Bemessungsdifferenzströme und der Beeinflussung durch Gleichfehlerströme richtig ausgewählt werden.

Im praktischen Betrieb erweist es sich als nachteilig, dass deren Auslöseverhalten, d.h. die Abhängigkeit von Ansprechwert und Ansprechzeit, negativ beeinflusst werden kann durch Ströme und Frequenzen, die oberhalb der spezifizierten Bemessungsgrößen liegen. Dabei kann je nach Höhe des Gleichfehlerstroms bzw. je nach Höhe und Frequenz des Wechselfehlerstroms eine Vormagnetisierung des Messstromwandler-Kerns erfolgen, die die Auslöseschwelle erhöht oder sogar eine Auslösung des RCD verhindert.

Eine derartige Situation kann beispielsweise bei einem Ladevorgang eines Elektrofahrzeugs an einer Ladestation auftreten, wenn die Ladestation eine Wechselspannung zur Verfügung stellt und mit einer Fehlerstrom-Schutzeinrichtung (RCD) vom Typ A ausgestattet ist. Überschreitet ein auf Grund eines Isolationsfehlers der Ladeanordnung fließender Gleichfehlerstrom - im Wesentlichen bestimmt durch den Isolationswiderstand der Gesamtanordnung Ladestation und Elektrofahrzeug - die normativ festgelegte Grenze eines maximal zulässigen Gleichfehlerstroms von z.B. 5 mA oder 6 mA, kann somit die Funktion der Fehlerstrom-Schutzeinrichtung (RCD) vom Typ A in der Ladestation beeinträchtigt werden.

Als kritisch werden daher Gleichfehlerströme angesehen, die oberhalb des für Fehlerstrom-Schutzeinrichtungen (RCDs) Typ A zulässigen Wertes von 6 mA liegen. Bezogen auf Wechselfehlerströme gelten für RCDs vom Typ A Werte oberhalb von z.B. 30 mA und einer Frequenz von 50/60 Hz bzw. oberhalb von 1000 Hz als kritisch. Diese normativ festgelegten Grenzen für maximal zulässige Fehlerströme bei Fehlerstrom-Schutzeinrichtungen (RCDs) Typ A können länderspezifisch variieren. So beträgt beispielsweise für die USA der maximal zulässige Gleichfehlerstrom 5 mA im Gegensatz zu dem derzeit gültigen IEC-Normwert von 6mA.

Der vorliegenden Erfindung liegt somit die Aufgabe zu Grunde, die Funktion einer normgemäßen Fehlerstrom-Schutzeinrichtung (RCD) Typ A sicher zu stellen und dadurch einen verbesserten elektrischen Schutz zu gewährleisten.

Zur Lösung dieser Aufgabe weist die erfindungsgemäße Schutzvorrichtung die Merkmale des Anspruchs 1 auf.

Die erfindungsgemäße Schutzvorrichtung weist eine Fehlerstrom-Schutzeinrichtung (RCD) Typ A und eine Überwachungseinrichtung zur Sicherstellung der Funktion der Fehlerstrom-Schutzeinrichtung (RCD) Typ A auf, wobei die Überwachungseinrichtung zur Sicherstellung der Funktion einer Fehlerstrom-Schutzeinrichtung (RCD) Typ A dieser Fehlerstrom-Schutzeinrichtung (RCD) Typ A in Reihe geschaltet ist und einen Messstromwandlerkreis zur Erfassung eines Gleichfehlerstroms (IF), eine Auswerteeinheit zur Verarbeitung des von dem Messstromwandlerkreis erfassten Signals, eine Abschaltvorrichtung 34, und eine mit dem Ausgang der Auswerteeinheit verbundene Kommunikationsschnittstelle, die einen Relaisausgang zur Steuerung der Abschaltvorrichtung beinhaltet, aufweist.

Durch die erfindungsgemäße Kombination einer normgemäßen Fehlerstrom-Schutzeinrichtung (RCD) vom Typ A mit der erfindungsgemäßen Überwachungseinrichtung wird eine schutztechnische Maßnahme mit erhöhter Sicherheit geschaffen. Eine nachteilige Auswirkung auf die Auslösecharakteristik der Fehlerstrom-Schutzeinrichtung (RCD) Typ A durch Fehlerströme mit Stromstärken bzw. Frequenzen oberhalb der die Fehlerstrom-Schutzeinrichtung (RCD) Typ A spezifizierenden Werte wird durch die Erfassung dieser funktionsbeeinträchtigenden Differenzströme vermieden.

Die Überwachungseinrichtung zur Sicherstellung der Funktion einer Fehlerstrom-Schutzeinrichtung (RCD) Typ A ist mit der Fehlerstrom-Schutzeinrichtung (RCD) Typ A in Reihe geschaltet. Die Reihenfolge der Anordnung beider Einrichtungen ist dabei prinzipiell unerheblich, da deren Summenstromwandler dieselbe Zuleitung umfassen und somit vom gleichen (Fehler-) Strom durchflossen werden.

Zur Sicherstellung der Funktion der Fehlerstrom-Schutzeinrichtung (RCD) Typ A wird eine Überwachungseinrichtung vorgeschlagen, die erfindungsgemäß einen Messstromwandlerkreis aufweist, der zur Erfassung von Gleichfehlerströmen dient. Der erfasste Differenzstrom wird in ein auswertbares Signal umgesetzt, das an eine Auswerteeinheit weitergeleitet wird. Weiterhin weist die Überwachungseinrichtung eine Kommunikationsschnittstelle auf, die mit dem Ausgang der Auswerteeinheit verbunden ist und das Ergebnis der Auswertung in ein Ausgangssignal umsetzt. Mit dieser erfindungsgemäßen Ausgestaltung kann ein Gleichfehlerstrom erkannt werden, der möglicherweise die Funktion einer Fehlerstrom-Schutzschaltung (RCD) Typ A beeinträchtigt. In Abhängigkeit des Ergebnisses der Auswertung können über die Kommunikationsschnittstelle geeignete Ausgangsignale zum Einleiten weiterer Schutzmaßnahmen wie die Abschaltung des fehlerhaften Leitungsabgangs oder die Ausgabe von Warnmeldungen bereitgestellt werden. Die Schutzfunktion der Fehlerstrom-Schutzschaltung (RCD) Typ A wird damit in ihrem originären Aufgabenbereich sichergestellt.

Im Hinblick auf die Vermeidung von Funktionsstörungen der Fehlerstrom-Schutzeinrichtung (RCD) vom Typ A durch (zu) hohe Gleichfehlerströme ist erfindungsgemäß der Messstromwandlerkreis in Verbindung mit der Auswerteeinheit für die Erkennung eines Gleichfehlerstroms mit einer Stromstärke größer als ein einstellbarer Gleichfehlerstrom-Grenzwert ausgeführt. Mit dieser Ausgestaltung kann die Überwachungseinrichtung an einen maximal zulässigen Gleichfehlerstrom der Fehlerstrom-Schutzeinrichtung (RCD) vom Typ A angepasst werden.

Erfindungsgemäß ist der Messstromwandlerkreis in Verbindung mit der Auswerteeinheit derart eingestellt, dass der Gleichfehlerstrom-Grenzwert einer normativ festgelegten Grenze eines für die Fehlerstrom-Schutzeinrichtung (RCD) Typ A maximal zulässigen Gleichfehlerstroms entspricht. Auftretende Gleichfehlerströme oberhalb dieser normativ vorgegebenen maximal zulässigen Stromstärke von 5 mA oder 6 mA werden somit von dem Messstromwandlerkreis in Verbindung mit der Auswerteeinheit erkannt und führen zur Abschaltung des betreffenden Leitungsstromkreises.

Von Vorteil ist weiterhin, wenn die Überwachungseinrichtung einen weiteren Messstromwandlerkreis zur Erfassung eines Wechselfehlerstroms aufweist. Mit dem weiteren Messstromwandlerkreis können analog zur Erfassung von Gleichfehlerströmen zur Sicherstellung der Schutzfunktion einer Fehlerstrom-Schutzeinrichtung (RCD) Typ A auch funktionsbeeinträchtigende Wechselfehlerströme erkannt werden.

Eine weitere vorteilhafte Ausgestaltung besteht darin, dass der weitere Messstromwandlerkreis in Verbindung mit der Auswerteeinheit für die Erkennung eines Wechselfehlerstroms mit einer Stromstärke größer als ein einstellbarer Wechselfehlerstrom-Grenzwert und mit einer Frequenz größer als ein einstellbarer Frequenzgrenzwert ausgeführt ist. Damit kann der weitere Messstromwandlerkreis hinsichtlich Stromstärke und Frequenz des Wechseldifferenzstroms an eine normgerechte zu überwachende Fehlerstrom-Schutzeinrichtung (RCD) Typ A angepasst werden. Bei Auftreten von Wechselfehlerströmen, deren Stromstärke und Frequenz oberhalb dieser Grenzwerte liegen, spricht dieser weitere Messstromwandlerkreis an und erzeugt in Verbindung mit der Auswerteeinheit und der Kommunikationsschnittstelle ein Ausgangssignal, das zur Abschaltung des betreffenden Leitungsstromkreises führt.

Ausgehend von in der Norm festgeschrieben Bemessungsgrößen für Fehlerstrom-Schutzeinrichtungen (RCDs) vom Typ A ist es zweckmäßig, dass der weitere Messstromwandlerkreis in Verbindung mit der Auswerteeinheit derart eingestellt ist, dass der einstellbare Wechselfehlerstrom-Grenzwert einer normativ festgelegten Grenze eines für die Fehlerstrom-Schutzeinrichtung (RCD) Typ A (8) maximal zulässigen Wechselfehlerstroms entspricht und der Frequenzgrenzwert 50Hz oder 60Hz oder 1000Hz beträgt.

Die erfindungsgemäße Überwachungseinrichtung weist zur Ansteuerung externer elektrischer Einrichtungen und zum Datenaustausch mit weiteren Geräten eine Kommunikationsschnittstelle auf. Diese ist bevorzugt mit einem Relaisausgang zur Steuerung einer Abschalteinrichtung ausgestattet. Ein von der erfindungsgemäßen Überwachungseinrichtung erkannter, möglicherweise funktionsgefährdender Fehlerstrom wird auf diese Weise in ein Ausgangssignal umgesetzt, das eine Abschalteinrichtung steuert und die Abschaltung des fehlerhaften Leitungsabgangs bewirkt.

Zweckmäßigerweise weist die Kommunikationsschnittstelle auch einen PWM-Ausgang und/oder einen normierten Stromsignal-Ausgang und/oder eine Bus-Schnittstelle auf.

Flexibilität hinsichtlich der Einstell- und Kommunikationsmöglichkeiten sowie ein automatisierter Ablauf der Messvorgänge ermöglicht eine Ausführung der Auswerteeinheit als Mikrocontroller.

Bevorzugt weist die Überwachungseinrichtung eine Bauform als Leiterplatte zur Montage in beliebige Geräteeinheiten auf oder sie ist als Leiterplatte mit Gehäuse als eigenständige bauliche Einheit ausgeführt.

Von Vorteil ist eine Auslegung der Überwachungseinheit zum Erfassen von Fehlerströmen in einem als TN-System ausgelegten Stromversorgungsnetz. Insbesondere bei Ladeeinrichtungen für Elektrofahrzeuge können funktionsgefährdende Gleichströme auftreten, hier ist eine Anpassungsmöglichkeit an das stationär geerdete (TN-) System vorteilhaft.

In einer weiteren Ausgestaltung umfasst die Überwachungseinrichtung die Abschalteinrichtung zur Abschaltung eines fehlerhaften Leitungsabgangs. In dieser Ausführungsform ist die Abschalteinrichtung der Überwachungseinheit zugeordnet und kann in eine gemeinsame Geräteeinheit mit dieser integriert sein.

Bezogen auf ein Verfahren zur Sicherstellung der Funktion einer Fehlerstrom-Schutzeinrichtung (RCD) Typ A wird die Aufgabe durch das Verfahren mit den Merkmalen des Anspruchs 10 gelöst. Bei dem erfindungsgemäßen Verfahren wird außerhalb der Fehlerstrom-Schutzeinrichtung (RCD) Typ A in einer der Fehlerstrom-Schutzeinrichtung (RCD) Typ A in Reihe geschalteten Überwachungseinrichtung mit einem Messstromwandlerkreis ein Gleichfehlerstrom erfasst, werden mit einer Auswerteeinheit die von den Messstromwandlerkreisen erfassten Signale verarbeitet und wird von einer mit dem Ausgang der Auswerteeinheit verbundenen Kommunikationsschnittstelle ein Ausgangssignal zur Steuerung der Abschaltvorrichtung erzeugt.

Der Grundgedanke des erfindungsgemäßen Verfahrens beruht darauf, neben der Stromerfassung in der Fehlerstrom-Schutzeinrichtung (RCD) Typ A einen davon unabhängigen Messstromwandlerkreis auszuwerten, um diejenigen Fehlerströme "abzufangen", die die Funktion der Fehlerstrom-Schutzeinrichtung (RCD) Typ A nachteilig beeinflussen könnten. Dazu wird mit einem Messstromwandlerkreis ein Gleichfehlerstrom erfasst und in einer Auswerteeinheit ausgewertet.

Erfindungsgemäß erzeugt die Auswerteeinheit ein Abschaltsignal, falls der von dem Messstromwandlerkreis erfasste Gleichfehlerstrom eine Stromstärke größer als ein veränderlicher Gleichfehlerstrom-Grenzwert aufweist. Der Messstromwandlerkreis kann somit auf die normgemäßen Fehlerstrom-Schutzeinrichtungen (RCDs) abgestimmt werden, um genau die Fehlerströme zu erkennen, die zu einer Störung der Auslösecharakteristik der Fehlerstrom-Schutzeinrichtung (RCD) Typ A führen würden. Sobald ein Gleichfehlerstrom den voreingestellten Stromgrenzwert überschreitet, stellt die Auswerteeinheit dies fest und erzeugt ein Abschaltsignal.

Erfindungsgemäß ist im Hinblick auf die durch Normvorgaben spezifizierten Fehlerstrom-Schutzeinrichtungen (RCDs) der veränderliche Gleichfehlerstrom-Grenzwert auf eine normativ festgelegte Grenze eines für die Fehlerstrom-Schutzeinrichtung (RCD) Typ A maximal zulässigen Gleichfehlerstroms eingestellt und kann beispielsweise 5mA oder 6mA betragen.

Als vorteilhaft erweist sich, wenn außerhalb der Fehlerstrom-Schutzeinrichtung (RCD) Typ A mit einem weiteren Messstromwandlerkreis ein Wechselfehlerstrom erfasst wird, mit einer Auswerteeinheit das von dem weiteren Messstromwandlerkreis erfasste Signal verarbeitet wird und von einer mit dem Ausgang der Auswerteeinheit verbundenen Kommunikationsschnittstelle ein Ausgangssignal erzeugt wird. In analoger Weise zu der Erkennung von funktionsbeeinträchtigenden Gleichfehlerströmen können mit dem weiteren Messstromwandlerkreis auch kritische Wechselfehlerströme erkannt und zur Sicherstellung der Schutzfunktion der Fehlerstrom-Schutzeinrichtung (RCD) Typ A weiter verarbeitet werden.

In bevorzugter Ausgestaltung erzeugt die Auswerteeinheit ein Abschaltsignal, falls der von dem weiteren Messstromwandlerkreis erfasste Wechselfehlerstrom eine Stromstärke größer als ein veränderlicher Wechselfehlerstrom-Grenzwert und eine Frequenz größer als ein veränderlicher Frequenzgrenzwert aufweist. Die Überwachungsfunktion des weiteren Messstromwandlerkreises kann damit auch in Bezug auf kritische Wechselfehlerströme an die zu überwachende Fehlerstrom-Schutzeinrichtung (RCD) Typ A angepasst werden und gegebenenfalls zu einer Abschaltung oder der Ausgabe einer Warnmeldung führen.

Der veränderliche Wechselfehlerstrom-Grenzwert ist mit Bezug auf die Normvorgaben für Fehlerstrom-Schutzeinrichtungen (RCDs) vom Typ A bevorzugt auf eine Grenze eines für die Fehlerstrom-Schutzeinrichtung (RCD) Typ A (8) maximal zulässigen Wechselfehlerstroms eingestellt und kann beispielsweise 30mA betragen. Der veränderliche Frequenzgrenzwert ist vorzugsweise auf 50Hz oder 60 Hz oder 1000Hz eingestellt.

Das von der Auswerteeinheit erzeugte Abschaltsignal bewirkt über die Umsetzung in der Kommunikationsschnittstelle in ein Ausgangssignal die Abschaltung des fehlerhaften Leitungsabgangs durch die Abschalteinrichtung. Damit ist die Funktion der Fehlerstrom-Schutzeinrichtung (RCD) Typ A bei gleichzeitiger erhöhter elektrischer Sicherheit durch Abschaltung des fehlerbehafteten Stromkreises gewährleistet.

Weitere vorteilhafte Ausgestaltungsmerkmale ergeben sich aus der nachfolgenden Beschreibung und der Zeichnung, die eine bevorzugte Ausführungsform der Erfindung an Hand eines Beispiels erläutert. Es zeigt die:

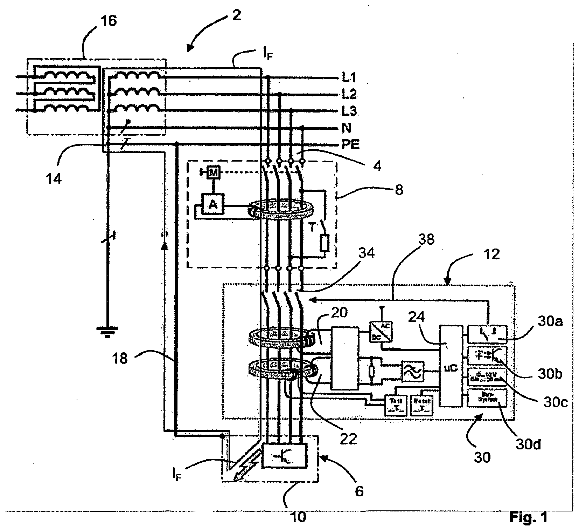

- **Fig. 1:**: ein TN-Stromversorgungssystem mit Fehlerstrom-Schutzeinrichtung (RCD) Typ A und erfindungsgemäßer Überwachungseinrichtung.

**Fig. 1** zeigt ein als TN-System 2 ausgeführtes Stromversorgungssystem 2, an das über eine Zuleitung (Leitungsabgang) 4 ein Betriebsmittel (Verbraucher) 6 angeschlossen ist. In dem Leitungsabgang 4 ist eine Fehlerstrom-Schutzeinrichtung (RCD) 8 vom Typ A für den Schutz bei Berühren von Körpern 10 elektrischer Betriebsmittel 6 angeordnet. Zur Sicherstellung der Funktion der Fehlerstrom-Schutzeinrichtung (RCD) 8 vom Typ A ist dieser eine erfindungsgemäße Überwachungseinrichtung 12 in der Ausführungsform mit zwei Messstromwandlerkreisen (20, 22) in Reihe geschaltet. Das TN-System 2 besteht aus drei Außenleitern L1, L2 und L3 sowie dem Neutralleiter N und dem Schutzleiter PE. Ein Punkt 14 an der Einspeisung 16 ist direkt geerdet, der Körper 10 des Betriebsmittels 6 ist über einen Schutzleiteranschluss 18 mit diesem Erdungspunkt 14 verbunden.

Die erfindungsgemäße Überwachungseinrichtung 12 weist zwei Messstromwandlerkreise 20, 22 auf, wovon der erste Messstromwandlerkreis 20 der Erfassung von Wechselfehlerströmen und der zweite Messstromwandlerkreis 22 der Erfassung von Gleichfehlerströmen dient. Auf dem zweiten Messstromwandler 22 befindet sich eine weitere Wicklung zur Kompensation von Gleichstrommagnetisierungen, wodurch die Gleichstromerfassung ermöglicht wird.

Die von den Messstromwandlerkreisen 20, 22 erzeugten auswertbaren Messsignale werden an eine Auswerteeinheit 24 weitergeleitet, die vorliegend als Mikroprozessor 24 implementiert ist. Das Ergebnis der Auswertung wird über die Kommunikationsschnittstelle 30 ausgegeben. Vorliegend ist die Kommunikationsschnittstelle 30 als Relaisausgang 30a zur Steuerung einer Abschalteinrichtung 34, als PWM-Ausgang 30b, als normierter Stromsignal-Ausgang 30c und als Bus-Schnittstelle 30d ausgeführt. Die Abschalteinrichtung 34 ist der Überwachungseinrichtung 12 lediglich funktional zugeordnet, kann also räumlich getrennt von dem Gehäuse der Überwachungseinrichtung 12 angeordnet sein.

Dargestellt ist weiterhin ein Fehlerstrom I_{F}, der infolge eines Körperschlusses zwischen aktivem Leiter L1 und dem Körper 10 des Betriebsmittels 6 entsteht und sich über den Schutzleiteranschluss 18 des Betriebsmittels 6 und den Erdungspunkt 14 schließt. Übersteigt dieser Fehlerstrom I_{F} eine gewisse Höhe und - im Fall eines Wechselfehlerstroms - auch eine bestimmte Frequenz, so kann dies zu Funktionsbeeinträchtigungen der Fehlerstrom-Schutzeinrichtung (RCD) 8 vom Typ A führen. Wegen der in Reihe zu der Fehlerstrom-Schutzeinrichtung (RCD) 8 vom Typ A geschalteten Überwachungseinrichtung 12 wird der Differenzstrom I_{F} auch von den Messstromwandlerkreisen 20, 22 erfasst und von der Auswerteeinheit 24 bewertet. Wird ein funktionsgefährdender Fehlerstrom I_{F} erkannt, so erzeugt die Auswerteeinheit 24 ein Abschaltsignal, das durch den Relaisausgang 30a der Kommunikationsschnittstelle 30 in ein Ausgangssignal 38 umgesetzt wird und die Abschaltung des fehlerhaften Leitungsabgangs durch die Abschalteinrichtung 34 bewirkt.

## Patentansprüche

1. Elektrische Schutzvorrichtung in einem Stromversorgungssystem (2),
**gekennzeichnet durch**
eine Fehlerstrom-Schutzeinrichtung (RCD) Typ A (8) und eine Überwachungseinrichtung (12) zur Sicherstellung der Funktion der Fehlerstrom-Schutzeinrichtung (RCD) Typ A (8), wobei die Überwachungseinrichtung (12) zur Sicherstellung der Funktion einer Fehlerstrom-Schutzeinrichtung (RCD) Typ A (8) dieser Fehlerstrom-Schutzeinrichtung (RCD) Typ A (8) in Reihe geschaltet ist und einen Messstromwandlerkreis (22) zur Erfassung eines Gleichfehlerstroms (IF), eine Auswerteeinheit (24) zur Verarbeitung des von dem Messstromwandlerkreis (22) erfassten Signals, eine Abschaltvorrichtung (34) und eine mit dem Ausgang der Auswerteeinheit (24) verbundene Kommunikationsschnittstelle (30), die einen Relaisausgang zur Steuerung der Abschaltvorrichtung beinhaltet, aufweist, wobei der Messstromwandlerkreis (22) in Verbindung mit der Auswerteeinheit (24) für die Erkennung eines Gleichfehlerstroms (I_{F}) mit einer Stromstärke größer als ein einstellbarer Gleichfehlerstrom-Grenzwert ausgeführt ist, wobei der Messstromwandlerkreis (22) in Verbindung mit der Auswerteeinheit (24) derart eingestellt ist, dass der Gleichfehlerstrom-Grenzwert einer normativ festgelegten Grenze eines für die Fehlerstrom-Schutzeinrichtung (RCD) Typ A (8) maximal zulässigen Gleichfehlerstroms entspricht.

2. Elektrische Schutzvorrichtung nach Anspruch 1,
**gekennzeichnet durch**
einen weiteren Messstromwandlerkreis (20) zur Erfassung eines Wechselfehlerstroms (I_{F}).

3. Elektrische Schutzvorrichtung nach Anspruch 2,
**dadurch gekennzeichnet,**
**dass** der weitere Messstromwandlerkreis (20) in Verbindung mit der Auswerteeinheit (24) für die Erkennung eines Wechselfehlerstroms (I_{F}) mit einer Stromstärke größer als ein einstellbarer Wechselfehlerstrom-Grenzwert und mit einer Frequenz größer als ein einstellbarer Frequenzgrenzwert ausgeführt ist.

4. Elektrische Schutzvorrichtung nach Anspruch 3,
**dadurch gekennzeichnet,**
**dass** der weitere Messstromwandlerkreis (20) in Verbindung mit der Auswerteeinheit (24) derart eingestellt ist, dass der Wechselfehlerstrom-Grenzwert einer normativ festgelegten Grenze eines für die Fehlerstrom-Schutzeinrichtung (RCD) Typ A (8) maximal zulässigen Wechselfehlerstroms entspricht und der Frequenzgrenzwert 50Hz oder 60Hz oder 1000Hz beträgt.

5. Elektrische Schutzvorrichtung nach einem der Ansprüche 1 bis 4,
**dadurch gekennzeichnet,**
**dass** die Kommunikationsschnittstelle (30) einen PWM-Ausgang (30b) und/oder einen normierten Stromsignal-Ausgang (30c) und/oder eine Bus-Schnittstelle aufweist (30d).

6. Elektrische Schutzvorrichtung nach einem der Ansprüche 1 bis 5,
**dadurch gekennzeichnet,**
**dass** die Auswerteeinheit (24) als Mikrocontroller ausgeführt ist.

7. Elektrische Schutzvorrichtung nach einem der Ansprüche 1 bis 6,
**gekennzeichnet durch**
eine Bauform als Leiterplatte zur Montage in beliebige Geräteeinheiten oder eine Ausführung als Leiterplatte mit Gehäuse als eigenständige bauliche Einheit.

8. Elektrische Schutzvorrichtung nach einem der Ansprüche 1 bis 7,
**gekennzeichnet durch**
eine Auslegung zum Erfassen von Fehlerströmen (I_{F}) in einem als TN-System (2) ausgelegten Stromversorgungsnetz.

9. Elektrische Schutzvorrichtung nach einem der Ansprüche 1 bis 8,
**gekennzeichnet durch**
eine Abschalteinrichtung (34) zur Abschaltung eines fehlerhaften Leitungsabgangs (4).

10. Verfahren zur Sicherstellung der Funktion einer Fehlerstrom-Schutzeinrichtung (RCD) Typ A (8) in einem Stromversorgungssystem (2),
**dadurch gekennzeichnet,**
**dass** außerhalb der Fehlerstrom-Schutzeinrichtung (RCD) Typ A (8) in einer der Fehlerstrom-Schutzeinrichtung (RCD) Typ A (8) in Reihe geschalteten Überwachungseinrichtung (12) mit einem Messstromwandlerkreis (22) ein Gleichfehlerstrom (I_{F}) erfasst wird, mit einer Auswerteeinheit (24) das von dem Messstromwandlerkreis (22) erfasste Signal verarbeitet wird und von einer mit dem Ausgang der Auswerteeinheit (24) verbundenen Kommunikationsschnittstelle (30) ein Ausgangssignal (38) zur Steuerung einer Abschaltvorrichtung (34) erzeugt wird, wobei die Auswerteeinheit (24) ein Abschaltsignal erzeugt, falls der von dem Messstromwandlerkreis (22) erfasste Gleichfehlerstrom (I_{F}) eine Stromstärke größer als ein veränderlicher Gleichfehlerstrom-Grenzwert aufweist, wobei der veränderliche Gleichfehlerstrom-Grenzwert auf eine normativ festgelegte Grenze eines für die Fehlerstrom-Schutzeinrichtung (RCD) Typ A (8) maximal zulässigen Gleichfehlerstroms eingestellt wird.

11. Verfahren nach Anspruch 10,
**dadurch gekennzeichnet,**
**dass** außerhalb der Fehlerstrom-Schutzeinrichtung (RCD) Typ A (8) mit einem weiteren Messstromwandlerkreis (20) ein Wechselfehlerstrom (I_{F}) erfasst wird, mit einer Auswerteeinheit (24) das von dem weiteren Messstromwandlerkreis (20) erfasste Signal verarbeitet wird und von einer mit dem Ausgang der Auswerteeinheit (24) verbundenen Kommunikationsschnittstelle (30) ein Ausgangssignal (38) erzeugt wird.

12. Verfahren nach Anspruch 11,
**dadurch gekennzeichnet,**
**dass** die Auswerteeinheit (24) ein Abschaltsignal erzeugt, falls der von dem weiteren Messstromwandlerkreis (20) erfasste Wechselfehlerstrom (I_{F}) eine Stromstärke größer als ein veränderlicher Wechselfehlerstrom-Grenzwert und eine Frequenz größer als ein veränderlicher Frequenzgrenzwert aufweist.

13. Verfahren nach Anspruch 11 oder 12,
**dadurch gekennzeichnet,**
**dass** der veränderliche Wechselfehlerstrom-Grenzwert auf eine normativ festgelegte Grenze eines für die Fehlerstrom-Schutzeinrichtung (RCD) Typ A (8) maximal zulässigen Wechselfehlerstroms und der veränderliche Frequenzgrenzwert auf 50Hz oder 60Hz oder 1000Hz eingestellt werden.

14. Verfahren nach einem der Ansprüche 10 bis 13,
**dadurch gekennzeichnet,**
**dass** das von der Auswerteeinheit (24) erzeugte Abschaltsignal über die Umsetzung in der Kommunikationsschnittstelle (30, 30a) in ein Ausgangssignal (38) die Abschaltung des fehlerhaften Leitungsabgangs (4) durch die Abschalteinrichtung (34) bewirkt.

## Claims

1. An electric protective device in a power supply system (2),
**characterized by**
a type A residual current device (RCD) (8) and a monitoring device (12) for safeguarding the function of the type A residual current device (RCD) (8), the monitoring device (12) for safeguarding the function of the type A residual current device (RCD) (8) being connected in series with said type A residual current device (RCD) (8) and comprising a measuring current transformer circuit (22) for detecting a DC fault current (I_{F}), an evaluation unit (24) for processing the signal detected by the measuring current transformer circuit (22), a shutoff device (34) and a communication interface (30) that is connected to the output of evaluation unit (24) and comprises a relay output for controlling the shutoff device (34), the measuring current transformer circuit (22) being designed in conjunction with the evaluation unit (24) to detect a DC fault current (I_{F}) having a current strength greater than a settable DC fault current limit value, the measuring current transformer circuit (22) being designed in conjunction with the evaluation unit (24) in such manner that the DC fault current limit value corresponds to a standard-defined DC fault current limit maximum permissible for the type A residual current device (RCD) (8).

2. The electric protective device as recited in claim 1,
**characterized by**
a further measuring current transformer circuit (20) for detecting an AC fault current (I_{F}).

3. The electric protective device as recited in claim 2,
**characterized in that**
the further measuring current transformer circuit (20) is designed in conjunction with the evaluation unit (24) for detecting an AC fault current (I_{F}) that has a current strength greater than a settable AC fault current limit value and a frequency higher than a settable frequency limit value.

4. The electric protective device as recited in claim 3,
**characterized in that**
the further measuring current transformer circuit (20) is designed in conjunction with the evaluation unit (24) in such manner that the AC fault current limit value corresponds to a standard-defined AC fault current limit maximum permissible for the type A residual current device (RCD) (8) and the frequency limit value is 50 Hz or 60 Hz or 1000 Hz.

5. The electric protective device as recited in any of claims 1 to 4,
**characterized in that**
the communication interface (30) has a PWM output (30b) and/or a standardized current signal output (30c) and/or a bus interface (30d).

6. The electric protective device as recited in any of claims 1 to 5,
**characterized in that**
the evaluation unit (24) is realized as a microcontroller.

7. The electric protective device as recited in any of claims 1 to 6,
**characterized by**
its construction as a printed circuit board for installation in any device units or design as a printed circuit board with a housing as a stand-alone structural unit.

8. The electric protective device as recited in any of claims 1 to 7,
**characterized by**
a configuration for detecting fault currents (I_{F}) in an electricity supply grid designed as a TN system (2).

9. The electric protective device as recited in any of claims 1 to 8,
**characterized by**
a shutoff device (34) for shutting off a faulty outgoing power feed (4).

10. A method for safeguarding the function of a type A residual current device (RCD) (8) in a power supply system (2),
**characterized in that**
a DC fault current (I_{F}) is detected outside the type A residual current device (RCD) (8) in a monitoring device (12) connected in series with the type A residual current device (RCD) (8) by a measuring current transformer circuit (22), the signal detected by the measuring current transformer circuit (22) is processed by an evaluation unit (24), and an output signal (38) for controlling a shutoff device (34) is generated by a communication interface (30) that is connected to the output of the evaluation unit (24),the evaluation unit (24) generating a shutoff signal if the DC fault current (I_{F}) detected by the measuring current transformer circuit (22) has a current strength greater than a changeable DC fault current limit value, the changeable DC fault current limit value being set to a standard-defined DC fault current limit maximum permissible for the type A residual current device (RCD) (8).

11. The method as recited in claim 10,
**characterized in that**
an AC fault current (I_{F}) is detected outside the type A residual current device (RCD) (8) by an additional measuring current transformer circuit (20), the signal detected by the measuring current transformer circuit (20) is processed by an evaluation unit (24), and an output signal (38) is generated by a communication interface (30) that is connected to the output of the evaluation unit (24).

12. The method as recited in claim 11,
**characterized in that**
the evaluation unit (24) generates a shutoff signal if the AC fault current (I_{F}) detected by the additional measuring current transformer circuit (20) has a greater current strength than a changeable AC fault current limit value and a frequency higher than a changeable frequency limit value.

13. The method as recited in claim 11 or 12,
**characterized in that**
the changeable AC fault current limit value is set to a standard-defined AC fault current limit maximum permissible for the type A residual current device (RCD) (8) and the changeable frequency limit value is set to 50 Hz or 60 Hz or 1000 Hz.

14. The method as recited in any of claims 10 to 13,
**characterized in that**
the shutoff signal generated by the evaluation unit (24) causes the shutoff of the faulty outgoing power feed (4) via the shutoff device (34) by being converted into an output signal (38) in the communication interface (30, 30a).

## Revendications

1. Dispositif de protection électrique dans un système d'alimentation en courant (2),
**caractérisé par**
un dispositif différentiel à courant résiduel (DDR) de type A (8) et un moyen de surveillance (12) destiné à assurer le fonctionnement du dispositif différentiel à courant résiduel (DDR) de type A (8), le moyen de surveillance (12) destiné à assurer le fonctionnement d'un dispositif différentiel à courant résiduel (DDR) de type A (8) étant connecté en série avec ledit dispositif différentiel à courant résiduel (DDR) de type A (8) et comprenant un circuit de transformateur de courant de mesure (22) destiné à détecter un courant de défaut continu (I_{F}), une unité d'évaluation (24) destinée à traiter le signal détecté par le circuit de transformateur de courant de mesure (22), un dispositif de coupure (34) et une interface de communication (30) qui est connectée à la sortie de l'unité d'évaluation (24) et comprend une sortie de relais destinée à commander le dispositif de coupure (34), le circuit de transformateur de courant de mesure (22) étant réalisé en association avec l'unité d'évaluation (24) pour la détection d'un courant de défaut continu (I_{F}) ayant une intensité de courant supérieure à une valeur limite de courant de défaut continu réglable, le circuit de transformateur de courant de mesure (22) étant configuré en association avec l'unité d'évaluation (24) de telle manière que la valeur limite de courant de défaut continu correspond à une limite normativement définie d'un courant de défaut continue maximal admissible pour le dispositif différentiel à courant résiduel (DDR) de type A (8).

2. Dispositif de protection électrique selon la revendication 1,
**caractérisé par**
un autre circuit de transformateur de courant de mesure (20) destiné à détecter un courant de défaut alternatif (I_{F}).

3. Dispositif de protection électrique selon la revendication 2,
**caractérisé en ce que**
l'autre circuit de transformateur de courant de mesure (20) est réalisé en association avec l'unité d'évaluation (24) pour la détection d'un courant de défaut alternatif (I_{F}) ayant une intensité de courant supérieure à une valeur limite de courant de défaut alternatif réglable et ayant une fréquence supérieure à une valeur limite de fréquence réglable.

4. Dispositif de protection électrique selon la revendication 3,
**caractérisé en ce que**
l'autre circuit de transformateur de courant de mesure (20) est configuré en association avec l'unité d'évaluation (24) de telle manière que la valeur limite de courant de défaut alternatif correspond à une limite normativement définie d'un courant de défaut alternatif maximal admissible pour le dispositif différentiel à courant résiduel (DDR) de type A (8) et la valeur limite de fréquence est de 50 Hz ou de 60 Hz ou de 1000 Hz.

5. Dispositif de protection électrique selon l'une quelconque des revendications 1 à 4,
**caractérisé en ce que**
l'interface de communication (30) comporte une sortie PWM (30b) et/ou une sortie de signal de courant (30c) normalisée et/ou une interface de bus (30d).

6. Dispositif de protection électrique selon l'une quelconque des revendications 1 à 5,
**caractérisé en ce que**
l'unité d'évaluation (24) est réalisé comme microcontrôleur.

7. Dispositif de protection électrique selon l'une quelconque des revendications 1 à 6,
**caractérisé par**
son type de construction comme circuit imprimé destiné à être installé dans n'importe quelle unité d'appareil ou par une réalisation comme circuit imprimé ayant un boîtier et constituant une unité constructive autonome.

8. Dispositif de protection électrique selon l'une quelconque des revendications 1 à 7,
**caractérisé par**
une configuration pour la détection de courants de défaut (I_{F}) dans un réseau d'alimentation électrique configuré comme système TN (2).

9. Dispositif de protection électrique selon l'une quelconque des revendications 1 à 8,
**caractérisé par**
un dispositif de coupure (34) destiné à couper une sortie de câble (4) défectueuse.

10. Procédé destiné à assurer le fonctionnement d'un dispositif différentiel à courant résiduel (DDR) de type A (8) dans un système d'alimentation en courant (2),
**caractérisé en ce qu'**
un courant de défaut continu (I_{F}) est détecté en dehors du dispositif différentiel à courant résiduel (DDR) de type A (8) dans un moyen de surveillance (12) connecté en série avec le dispositif différentiel à courant résiduel (DDR) de type A (8) par un circuit de transformateur de courant de mesure (22), le signal détecté par le circuit de transformateur de courant de mesure (22) est traité par une unité d'évaluation (24) et un signal de sortie (38) destiné à commander un dispositif de coupure (34) est généré par une interface de communication (30) connectée à la sortie de l'unité d'évaluation (24), l'unité d'évaluation (24) générant un signal de coupure si le courant de défaut continu (I_{F}) détecté par le circuit de transformateur de courant de mesure (22) a une intensité de courant supérieure à une valeur limite de courant de défaut continu changeable, la valeur limite de courant de défaut continu changeable étant réglée à une limite normativement définie d'un courant de défaut continu maximal admissible pour le dispositif différentiel à courant résiduel (DDR) de type A (8).

11. Procédé selon la revendication 10,
**caractérisé en ce qu'**
un courant de défaut alternatif (I_{F}) est détecté en dehors du dispositif différentiel à courant résiduel (DDR) de type A (8) par un autre circuit de transformateur de courant de mesure (20), le signal détecté par l'autre circuit de transformateur de courant de mesure (20) est traité par une unité d'évaluation (24) et un signal de sortie (38) est généré par une interface de communication (30) connectée à la sortie de l'unité d'évaluation (24).

12. Procédé selon la revendication 11,
**caractérisé en ce que**
l'unité d'évaluation (24) génère un signal de coupure si le courant de défaut alternatif (I_{F}) détecté par l'autre circuit de transformateur de courant de mesure (20) a une intensité de courant supérieure à une valeur limite de courant de défaut alternatif changeable et une fréquence supérieure à une valeur limite de fréquence changeable.

13. Procédé selon la revendication 11 ou 12,
**caractérisé en ce que**
la valeur limite de courant de défaut alternatif changeable est réglée à une limite normativement définie d'un courant de défaut alternatif maximal admissible pour le dispositif différentiel à courant résiduel (DDR) de type A (8) et la valeur limite de fréquence changeable est réglée à 50 Hz ou 60 Hz ou 1000 Hz.

14. Procédé selon l'une quelconque des revendications 10 à 13,
**caractérisé en ce qu'**
en étant converti en un signal de sortie (38) dans l'interface de communication (30, 30a), le signal de coupure généré par l'unité d'évaluation (24) provoque la coupure de la sortie de câble (4) défectueuse par le dispositif de coupure (34).
